(19) Europäisches Patentamt
European Patent Office
Office européen des brevets

(11) **EP 2 179 860 A1**

(12) **EUROPEAN PATENT APPLICATION**
published in accordance with Art. 153(4) EPC

(43) Date of publication:
**28.04.2010 Bulletin 2010/17**

(51) Int Cl.:
**B42D 3/12** (2006.01)    **G09B 5/06** (2006.01)
**G11B 27/10** (2006.01)    **G09B 5/04** (2006.01)

(21) Application number: **07822903.6**

(22) Date of filing: **23.08.2007**

(86) International application number:
**PCT/ES2007/000495**

(87) International publication number:
**WO 2009/024626 (26.02.2009 Gazette 2009/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Tunes4Books, S.L.**
**C/Marie Curie, 14**
**Parque Tecnológico de Andalucía**
**29590 Campanillas (Málaga) (ES)**

(72) Inventor: **CERVERA NAVAS, Leonardo**
**E-29590 Campanillas (Málaga) (ES)**

(54) **METHOD AND SYSTEM FOR ADAPTING THE REPRODUCTION SPEED OF A SOUNDTRACK ASSOCIATED WITH A TEXT TO THE READING SPEED OF A USER**

(57)    Method and control system for adapting the reproduction speed of a soundtrack to the text reading speed of a user. For this purpose, the moment when the reader reaches a point of reference in the text is recorded; a moment when his or her reading speed is calculated from the time elapsed on reaching the reference point and the data available on the length of text between reference points. When each reference point is passed a soundtrack of the text is reproduced depending on the calculated reading speed, and on prerecorded historical data on reading speed, and by means of shortening or lengthening of pauses, imperceptible for the reader, during the playing of the soundtrack. The text can be in a standard book or can be displayed on a programmed computer.

Fig. 1

**Description**

**OBJECT OF THE INVENTION**

A Method and control system for adapting the recording speed of a soundtrack to a user's reading speed.

This invention allows a reader to read a book in paper format or on the screen of a computer while listening to a soundtrack on an audio player, which is synchronized with his/her reading speed and which is made up of music and sounds adapted to the contents of the written text, and that could have been previously downloaded from the Internet on to the audio player's memory.

**BACKGROUND REGARDING THE INVENTION**

In the prior art, we are aware of the existence of "audio-books" which include audio players such as cassettes, CDs, MP3 files, etc., thanks to which written text is reproduced.

Some examples of the prior art of "audio-books" can be found in American patent application number US20050200116 which discloses an electronic device in which a book is lodged, which allows for the electronic storage of the contents of the said book and has magnetic means for detecting which page of the book the person is reading. This enables the means of storage of the book's contents to emit a sound signal that reproduces the contents of the page/paragraph, which is being visualized at that moment. This patent indicates that at the time there were already electronic appliances on the market which were sold together with the books they referred to and linked data cards, so that each page/paragraph/image in the book has a triggering device (which makes these kind of books very bulky) that the reader can activate and which is linked to the data storage card of the contents of a page/paragraph/image of the book, enabling the appliance to play the contents of the visualized pages.

Other "talking books" have been described in American utility patents US5.371.195 and US5.290.190, or US4.778.391 which describes a book that includes a reading memory and another one that includes a sound playing system that can be disconnected.

There are other inventions related to the aforementioned inventions such as the French patent FR2700990 which describes a card that includes a device on which you can record a voice message and play it back, or the American utility patent US6.148.173 which describes a book or photo album where each page has some "markers", each of which are linked to a photo and to an audio segment stored in the audio memory linked to each photo. The book has an audio player to reproduce the stored sounds linked to each photo. Another photo album, which includes a recorder for recording and playing voice messages linked to each photo, can be found in the European patent application EP1.260.380.

To the contrary, the object of this invention that we are describing here allows us to purchase/use a normal paper book, with no additional devices or material added which could hinder or deter its usage, manufacturing or increase the costs, and which is to be read while at the same time the user listens to, thanks to a modified audio player which comes with the book, a sound track with sounds specially adapted to the book and to each chapter/passage of the book, and which could serve as a clear booster for getting children and teenagers, and even adults, to read, thanks to the stimulus provided by the music.

The following inventions can be adapted to reading a text on a computer screen.

This invention gives way to a new sensory experience, well known in other cultural areas such as the film industry, where soundtracks and sound effects play a key role.

**DESCRIPTION OF THE INVENTION**

This invention regards a method and a control system for synchronizing the reproduction speed of a sound track with a user's reading speed.

For this purpose, the moment when the user reaches a point of reference in the text is recorded; a moment when his or her reading speed is calculated from the time elapsed on reaching the reference point and the data available on the length of text between reference points. When each reference point is passed, a soundtrack of the text is reproduced depending on the calculated reading speed and on prerecorded historical data on reading speed, by means of shortening or lengthening of pauses, imperceptible for the reader.

The written text can be a standard book in which markers will be placed all through the text to work as reference points, or a text that is visualized on a computer screen that has been programmed so that the reference points will be determined by page jumps, the movement of the vertical scroll bar or by pressing a certain key.

The invention method can be activated thanks to an audio player which includes a computer programme, firmware, specifically programmed, so that it can calculate and memorize the reader's reading speed (the reader must press a button on the player every time he comes across a marker in the book), and reproduce the soundtrack in synchronization with the reader's reading speed.

If the reader is reading from an electronic device, he/she will unconsciously send signals that indicate that he or she has reached a reference point by moving the vertical scroll bar or upon turning the page.

This invention is particularly interesting for children and teenagers as their reading speed may vary significantly in months or in a few years' time.

The reproducer's memory is linked to a computer programme and contents that can be downloaded from an Internet website where previously writers can produce literature linked to music and original sounds, or, the musicians and sound technicians can add soundtracks to the existing literary works.

**BRIEF DESCRIPTION OF THE DRAWINGS**

The following drawings are included to help understand the invention:

- Figure 1: Block Diagram with the reproduction components of the soundtrack.

- Figure 2: Flowchart with the operating stages.

**PREFERENTIAL EXECUTION OF THE INVENTION**

The details of this preferential execution of the invention, which has to be understood in a broad sense without limitation, are as follows.

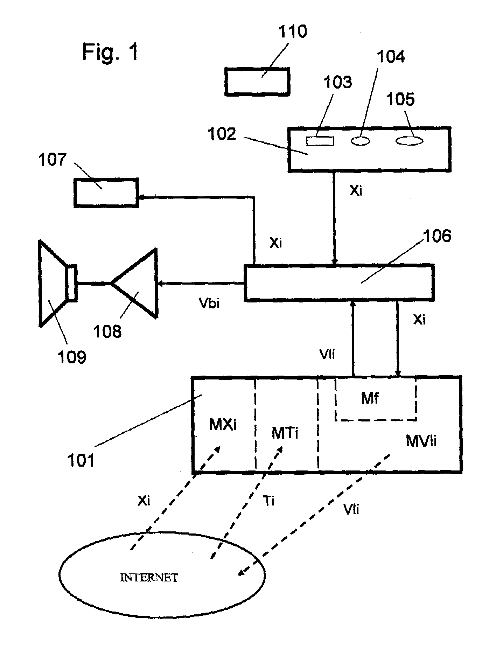

Figure 1 represents a block diagram of the audio player components from which a text reader will be able to listen, adapt and control the reproduction of the soundtrack linked to the text.

If the text is in a traditional book format, he/she will have a number of markers in the text (X1, X2, X3... Xi) numbered in accordance with their position in the memory (101) of the device used for reproducing the soundtrack linked to the book.

Alternatively, the text to be read may be on an electronic medium such as a computer programmed so that the text reference points or markers, are indicated with page turning, movement of the vertical scroll bar or by the pressing of a key.

The sound-playing device consists of:

- A data storage medium, or memory (101), which can be read by a computer for the downloading of Internet contents which will contain at least some memory spaces with:

    Some memory positions (MXi) corresponding to the reference points of a text indicated in this preferential execution by (x1, x2... xi) distributed throughout the text in the book.

    Digital data (MTi) which represent the sound of the book, as well ass data regarding the length of the text between markers (T[0,1], T[1,2]... T[i-1,i]),

    A reader's profile (MVli) with previous data regarding calculated reading speed "historical data" (vl1, vl2... vli), and

    A firm computer programme (Mfi), or firmware, adapted and programmed for the carrying out the synchronization process between reading speeds (Vli) and the reproduction of the book's soundtrack (Vbi),

- a command unit (102) with buttons to allow the reader to control the player, and which include a main switch (103) with a mode position adapted to the reader and an activation position in standard mode, an start switch (104) for the player in the mode that the main switch is in (103), as well as some fast forward/rewind buttons (105) between marker positions (xi) of the player's memory (MXi) which correspond to each marker (Xi) indicated in the text,

- a central processing unit (106) to process the data and send out the control order regarding the reproduction speed (Vbi),

- a screen (107) which provides the text reader with visual information, such as the last marker (xi) that the soundtrack has reproduced.

- a conversion unit (108), which transforms the data signal into analogical sound

- a transduction unit (109) for playing the sounds recorded in the memory (101) and

- a battery (110).

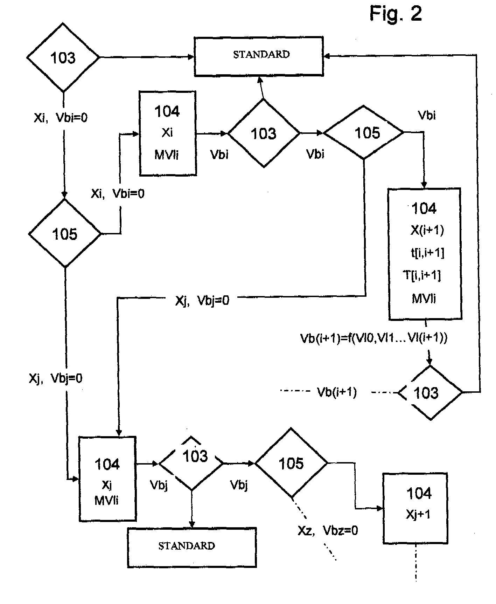

As you can see in figure 2, the reader can activate the player in standard mode via the main switch (103), so that the player may operate like any standard sound player on the market.

If the readers changes the main switch (103) to the adapted mode, the reader will listen to the book's sound track and will be able to, as described in the following explanations, adapt the speed of the soundtrack (Vbi) to his/her reading speed (Vli).

In standard mode, files regarding the soundtrack cannot be played, and vice versa, in the adapted mode, files other than those pertaining to the soundtrack cannot be reproduced.

The reader must press the start button (104) when he/she starts reading the book, thereby activating the reproduction of the soundtrack at the reproduction speed (Vbi) that at that time has been stored in the memory (101) of the reader's profile (Mvli).

The reader, while reading the book, must press the start button (104) each time he reaches one the markers (Xi) set out all through the book

Each of these markers will have a number that corresponds with its position in the player's memory (MXi). This will enable that, in those cases where the synchronization between reading and the execution of the soundtrack is lost, or if the readers decides to start reading the book at a chapter or place that is not at the beginning of the book, he or she can just use the fast forward/rewind buttons (105) to find the text marker from which the user starts reading or continues where he/she left off and to press the start button (104) once again so that the soundtrack will play from the identified marker.

As you can see in figures 1 and 2, the player's firmware (Mf) calculates the reading speed (Vli) at each point in time (ti) thanks to:

- The pressing of the start button (104) each time the reader reaches a marker Xi, which will determine the time (t[i, j]) elapsed between two markers (Xi,Xj),
- The digital data regarding length of text (Ti) which has been stored in the memory (MTi) together with the memory positions of the markers (Xi),

For example, the reading speed can be defined with the following equations:

```
marker X0    t0 = 0
        X1 → t1=0+t[0,1]; V11=T[0,1]/t1
        X2 → t2=t[0,2]=t[0.1]+t[1.2]=0+t1+t[1.2];
             T2=T[0.1]+T[1.2]
             Vl[1.2]=T[1.2]/t[1.2];
             Vl[2]=T2/t2=
             =Vl[0.2]=(T[0.1]+T[1.2])/(t[0.1]+t[1.2])


        (V12 may be the same as, for example, Vl[0.2] or
        Vl[1.2] depending on the references one takes for
        making the calculations)
        ................................................................
        Xi → ti = t[0.i]= Σ t[i-1.i]
             Vl[j.i] = T[j.i]/t[j.i]
```

(Vli may also be the same, for example, as Vl[i-1.i] o Vl[0.i] o Vl[j,i], etc)

When calculating the reading speed of a user (Vli) when each marker is passed Xi and by storing the prerecorded historical data regarding reading speed (Vli) in the corresponding part of the memory (101) that refers to historical data or the user's profile (MVli), the process unit (106) commands the reproduction of the book's soundtrack at a reproduction speed (Vbi) that depends on the user's reading speed:

$$Vbi= f(V10,V11,V12,V13,V14… V1i)$$

The Vbi calculation function will be able to give more or less relevance to the reading speeds registered recently thanks to an algorithm, which takes into account the tendencies of the data regarding reading speed registered over time.

This synchronization is carried out by the processer (106) by means of shortening or lengthening the pauses, imperceptible for the reader, activating and deactivating the pause function automatically.

As the data regarding the synchronization and the reading speed (Vli) are recorded in the corresponding space (MVli) of the player's internal memory (101), the synchronization is adjusted progressively as the reader read so that the reader's contribution by pressing the start up button (104), becomes less and less necessary as the reading progresses.

Thanks to some of buttons on the command unit (102) an entry signal can be sent to the processor (106) which interrupts the reproduction of the soundtrack (while at the same time sending an acoustic signal that can easily be identified by the reader) and functions as an electronic marker so that the next time the player is turned on in adapted mode, the reproduction of the soundtrack will continue exactly where the reader left off.

In the meantime, the user may use the player in standard mode without it affecting the electronic marker function or, simply use the interruption of the sound track to interrupt the reading of the book or to re-read a passage of the book without losing the synchronization.

Thanks to the storage of synchronization data in the memory (101), the downloading of soundtracks from a linked Internet website, can be carried out in a way already adapted to a personalized reading speed. In effect, the player is connected to the computer in the mode adapted to the reader and the computer is also connected to the Internet website to download the soundtrack, the user's profile is updated and the soundtracks to be downloaded will be adapted to the corresponding reading speed.

## Claims

1. Method for adapting the reproduction speed (Vbi) of a sound track to the text reading speed (Vli) of a user comprising the following steps:

   recording of the moment (ti) in which a user reaches at least one reference point (Xi) in the said text,
   calculation and recording of the text reading speed (Vli) with regard to the aforementioned moment (ti) in which a user reaches the said reference point in the text and the length of text (Xi) between reference points. (Ti),
   adjustment of the reproduction speed (Vbi) of the soundtrack depending on the calculated reading speed (Vli) by means of lengthening or shortening the pauses in the reproduction of the soundtrack.

2. Method of adapting the reproduction speed (Vbi) of a sound track to the text reading speed (Vli) in accordance with the previous claim, **characterized by** an adjustment of the reproduction speed (Vbi) of the soundtrack depending on the changes in the historical data on calculated reading (Vli) allowing for higher relevance of the more recent records.

3. A system for carrying out the method contained in claim 1, **characterized in that** it includes a text medium and access to a data storage medium like the one in claim 4, and a sound reproduction device which includes:

   a way of storing data (101) which comprises: some memory positions (MXi) which correspond to the reference points distributed all thought the reading text, digital data which represent the text's soundtrack as well as the length of text between reference points (MTi), the historical data regarding the user's reading speed (MVli), a computer programme, or firmware (Mf), which calculates a reader's reading speed (Vli) according to when the user reaches the reference points in the text and the aforementioned data (Xi, Ti y Vli) stored in the data storage means (101),
   a central unit for data processing (106),
   a main switch (8) on the player with a position in adapted to the reader and an activation position in standard mode, a start button (9) for reproduction of the text's soundtrack, as well as some fast forward/rewind buttons (105) for moving between the aforementioned memory positions which correspond to reference points of the text to be read (MXi), and a manual interruption means which will activate an electronic marker for recording the point where the soundtrack stopped and puts the sound player in standard mode,
   a conversion unit (108) of data signals into analogical sound,

a transducer unit (109) for reproducing the sound track,
a battery (110), and
a screen (107) for visualizing the reproduction data, which show the reference point, reached in the reproduction of the soundtrack.

**4.** A system for operating the method contained in claim 1, according to claim 3, **characterized in that** a central data processing (106) commands the transducer unit (109) to reproduce the text's soundtrack (Vbi) depending on the user's reading speed (Vli) calculated by the firmware (Mf), lengthening or shortening the pauses by means of activating or deactivating the automatic pause function of the reproduction device, and by giving the command to store in the corresponding space of the memory (MVli) data regarding synchronization and the calculated reading speed (Vli).

**5.** A system for executing the method contained in claim 1, in accordance with either of claims 3 or 4, **characterized in that** the digital data of the text's sound track (MTi) can be downloaded from the internet in a way already adapted to the reader's reading speed (Vli) by reading the historical data regarding stored reading speeds (MVli) in the data storage medium (101) itself.

**6.** A system for executing the method of claim 1, in accordance with any of claims 3, 4 and 5, **characterized in that** the text medium is a standard book where the text's reference points (Xi) are represented by some markers and the recording of the moment (ti) when the markers are passed is caused by the reader pressing a button (104) to start the sound reproducing device.

**7.** A system for carrying out the method contained in claim 1, in accordance with any of claims 3, 4 and 5, **characterized in that** the text medium is a computer where the text reference points are represented by the end of page indicators or the movement of the vertical scroll bar, and the computer itself is programmed to send an end of page indicator to the memory of the reproducing device.

**8.** An adapted computer programme for carrying out the method of any of the previous claims in a data processing programmable device.

**9.** A data storage system including a computer programme which carries out the method of the previous claims.

Fig. 1

## Fig. 2

## INTERNATIONAL SEARCH REPORT

| International application No. |
|---|
| PCT/ ES 2007/000495 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)
B42D3/12, G09B5/06, G11B27/10 , G09B5/04

Documentation searched other than minimum documentation to the extent that such documents are included in the fields searched

Electronic data base consulted during the international search (name of data base and, where practicable, search terms used)

CIBEPAT,EPODOC,WPI

**C. DOCUMENTS CONSIDERED TO BE  RELEVANT**

| Category* | Citation of document, with indication, where appropriate, of the relevant passages | Relevant to  claim No. |
|---|---|---|
| X | GB 2309932 A (HILL ANDREW) 13.08.1997, Pages 1-5;Page 5, lines 1-19; Page 6, lines 11-18,27-32;Page 7; lines 1-7; Page 9, lines 22-31;Page 10, lines 1-7,15-27;Page 16, lines 12-26;Page 20,lines 25-29; Page 21, lines 1-5,16-21;*Todas las claims, *Todas las figures. | 1 |
| X | EP 0817153 A1 (LIN JEN CHUNG ; SHIN CHIN CHIH) 07.01.1998, column 2, lines 46-58; column 3; column 4, lines 1-29,47-51; column 5, lines 19-27; column 8,lines 22-33; *Todas las claims, *Todas las figures. | 1 |
| A | GB 2347647 A (EVLOGIDIS TINA FOTINI LISA) 13.09.2000, | 1 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 29 April 2008      (29.04.2008) | (21/05/2008) |
| Name and mailing address of the ISA/ O.E.P.M. <br><br> Paseo de la Castellana, 75 28071 Madrid, España. <br> Facsimile No.   34 91 3495304 | Authorized officer <br> Mª C. González Vasserot <br><br> Telephone No. +34 91 3493087 |

Form PCT/ISA/210 (second sheet) (April 2007)

## INTERNATIONAL SEARCH REPORT

| | International application No. |
|---|---|
| | PCT/ES 2007/000495 |

C (continuation).          DOCUMENTS CONSIDERED TO BE   RELEVANT

| Category* | Citation of documents, with indication, where appropriate, of the relevant passages | Relevant to claim No. |
|---|---|---|
| A | US 5419705 A (SANDVIK et al.) 30.05.1995, | 1 |

Form PCT/ISA/210 (continuation of second sheet) (April 2007)

## INTERNATIONAL SEARCH REPORT

Information on patent family members

International application No.

PCT/ ES 2007/000495

| Patent document cited in the search report | Publication date | Patent family member(s) | Publication date |
|---|---|---|---|
| GB 2309932 AB | 13.08.1997 | WO 9728873 A | 14.08.1997 14.08.1997 14.08.1997 |
| EP 0817153 AB | 07.01.1998 | EP 19960110713 DE 69627997 T | 03.07.1996 25.03.2004 |
| GB 2347647 A B | 13.09.2000 | NONE | ----------- |
| US 5419705 A | 30.05.1995 | NONE | ----------- |

Form PCT/ISA/210 (patent family annex) (April 2007)

| INTERNATIONAL SEARCH REPORT | International application No. |
| --- | --- |
| | PCT/ ES 2007/000495 |

CLASSIFICATION OF SUBJECT MATTER

*B42D 3/12* (2006.01)
*G09B 5/06* (2006.01)
*G11B 27/10* (2006.01)
*G09B 5/04* (2006.01)

Form PCT/ISA/210 (extra sheeet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050200116 A
- US 5371195 A
- US 5290190 A
- US 4778391 A
- FR 2700990
- US 6148173 A
- EP 1260380 A